# EUROPEAN PATENT APPLICATION

(11) **EP 4 310 328 A1**
(43) Date of publication of application: **24.01.2024**
(21) Application number: 22306074.0
(22) Date of filing: 20.07.2022
(51) Int. Cl.: F03D 17/00, F03D 80/50

(54) **A METHOD FOR DETERMINING THE PRODUCTION AVAILABILITY OF AN OFFSHORE WIND FARM**

(71) Applicant: TotalEnergies OneTech, 92400 Courbevoie (FR)
(72) Inventor: CLEMENT, Guillaume, 64000 PAU (FR); BENHAMOU, ALEXIS, 92370 CHAVILLE (FR); ESTECAHANDY, Maïder, 64000 PAU (FR)
(74) Representative: Lavoix

(57) **Abstract**

The present invention concerns a method for determining the production availability of an offshore wind farm (10) comprising at least one floating wind turbine (11), the method comprising:
- obtaining wind farm data,
- obtaining strategy data relative to operation and maintenance resources to carry out an action on the floating wind turbine(s) (11),
- obtaining meteorological data relative to an offshore environment for the offshore wind farm (10) over a given period of time,
- determining motion parameters as a function of the wind farm data and of the meteorological data, and
- determining the production availability of the offshore wind farm (10) in the offshore environment over the given period of time on the basis of the wind farm data, of the strategy data, of the meteorological data, and of the determined motion parameters.

## Description

### TECHNICAL FIELD OF THE INVENTION

The present invention concerns a method for determining the production availability of an offshore wind farm. The present invention also concerns an associated computer program product. The present invention also relates to an associated readable information carrier.

### BACKGROUND OF THE INVENTION

Preparing for the energy transition is one of the major concerns nowadays. In particular, in 2019 in France, the share of renewable energies in the production of electricity was around 20%. Among them, the share of wind power amounted to 6% and was exclusively implemented on land. From 2022, new offshore wind farm projects are emerging on the coasts and raise new questions for the offshore wind industry to meet the objectives of increasing the share of renewable energies.

To this end, operation and maintenance (O&M) models have been developed to help in the decision making process of the best O&M strategy to be applied in order to obtain an optimum between the Operating Expenditure (OPEX) and the Production Based Availability (PBA) for a given farm.

The current O&M models take into account the environment of the wind farm in a very simplified way.

However, such models do not take into account environmental constraints of an offshore wind farm, which have an impact on the reliability of the wind farm but also on maintenance. Indeed, an offshore wind farm is in a constrained environment (e.g.: component fatigue). In addition, the maintenance of an offshore wind farm requires adapting logistical means of access to the production facilities (e.g.: Crew Transfer Vessel, Service Operational Vessel, helicopter,...), maintenance policy (e.g.: opportunistic preventive maintenance) but also teams of technicians and operational engineers (e.g.: seasickness) according to the sea state. Thus, weather conditions have a significant impact on availability but also on OPEX (operational expenditure) and the rigorous consideration of these data and their impacts in a reliability model is important to obtain relevant results, and tend to optimize LCOE (Levelized Cost Of Energy).

In particular, wave, current and wind induced motions at the vessel landing, at any point on the floater and at the nacelle, will prevent O&M crews from accessing the facility and/or performing their inspections and maintenances (preventive and corrective) on the turbine at least some of the time. First, transferring personnel to the vessel landing may be impractical if the relative motions and accelerations between the vessel and the floater are too great. Second, technicians may not be able to work safely, or with greatly degraded efficiency, in a moving environment at any point on the floater and even more severely at the nacelle. Third, the speed of the vessels to get to the farm is drastically affected by weather conditions, increasing the intervention time and the working time of the technicians on the facilities.

The consequence is a potential impediment to the realization of O&M tasks part of the time, with a direct consequence on the availability of production, which is not finely determined by the existing O&M models. For example, some studies show that in typical North Sea weather conditions, access to wind farms, for a given choice of vessel, is less than 10% of the time over several months of the year.

### SUMMARY OF THE INVENTION

There exists a need for a method enabling to evaluate in a more precise way the production availability of an offshore wind farm.

To this end, the invention relates to a method for determining the production availability of an offshore wind farm, the offshore wind farm comprising at least one floating wind turbine, the method comprising the following steps which are computer-implemented:
- obtaining wind farm data relative to features of the offshore wind farm,
- obtaining strategy data relative to operation and maintenance resources to carry out an action on the floating wind turbine(s) of the offshore wind farm,
- obtaining meteorological data relative to an offshore environment for the offshore wind farm over a given period of time,
- determining motion parameters as a function of the wind farm data and of the meteorological data, the motion parameters being parameters quantifying the motions of at least an element, such as the nacelle or the floater, of a floating wind turbine of the offshore wind farm and/or the motions of a vessel aiming to reach said floating wind turbine to perform operation and/or maintenance actions on said floating wind turbine and
- determining the production availability of the offshore wind farm in the offshore environment over the given period of time on the basis of the wind farm data, of the strategy data, of the meteorological data, and of the determined motion parameters.

The method according to the invention may comprise one or more of the following features considered alone or in any combination that is technically possible:
- the step for determining the production availability comprises, for each time step of the given period of time:
   - determining any eventual non-productive events on the basis of the wind farm data, of the strategy data and of the meteorological data, a non-productive event being any event affecting the production of the offshore wind farm and for which an operation and/or maintenance action is requested, and
   - at least in the case where a non-productive event has been determined, determining, on the basis of the motion parameters, the accessibility of the offshore wind farm for an operation and/or a maintenance action, the determined accessibility of the offshore wind farm for the considered time step affecting the production availability.
- the accessibility of the offshore wind farm is determined by evaluating whether the motions parameters for the considered time step reach predetermined accessibility criteria.
- the motion parameters are determined only for each time step of the given period of time for which a non-productive event has been determined at the preceding time step.
- the computer has access to a database in which predetermined meteorological conditions are associated to predetermined motion parameters for the offshore wind farm, the motion parameters being determined by comparing the meteorological data with the predetermined meteorological conditions of the database in order to obtain the predetermined meteorological conditions the closest from the meteorological data, the determined motion parameters being the predetermined motion parameters corresponding to the closest predetermined meteorological conditions.
- each floating wind turbine comprises a nacelle and a floater, the motion parameters comprising at least one of the following parameters:
   - a parameter relative to the displacement of the nacelle of a floating wind turbine,
   - a parameter relative to the acceleration of the nacelle of a floating wind turbine,
   - a parameter relative to the displacement of the floater of a floating wind turbine,
   - a parameter relative to the acceleration of the floater of a floating wind turbine,
   - a parameter relative to the relative displacement of the floater of a floating wind turbine with respect to a given vessel aiming to reach said floating wind turbine,
   - a parameter relative to the relative acceleration of the floater of a floating wind turbine with respect to a given vessel aiming to reach said floating wind turbine, and
   - a parameter relative to a slowdown of the cruising speed of a given vessel aiming to reach a floating wind turbine.
- the meteorological data comprise wind data and sea data, the sea data being relative to waves data and/or sea current.
- the strategy data comprise data relative to staffing and logistic means and data relative to offshore base and spare part.
- the wind farm data comprise at least one of the following elements:
   - data relative to the floating wind turbines,
   - data relative to wind farm design,
   - data relative to failure rates of the floating wind turbines,
   - data relative to scheduled maintenance and inspection,
   - data relative to safety test,
   - data relative to spare part management, and
   - data relative to curative maintenance.
- at least a non-productive event, is one of the following events:
   - inspection and preventive maintenance,
   - breakdown and production shutdown, and
   - curative maintenance.
- the step for determining the motion parameters is performed using an hydrodynamic model and the step for determining the production availability is performed using an operation and maintenance model.
- the determined production availability of the offshore wind farm is intended to be used for setting up operation and maintenance resources for carrying out operation and maintenance actions on the offshore wind farm.
- the method comprises a step for setting up operation and maintenance resources for carrying out operation and maintenance actions on the offshore wind farm as a function of the determined production availability of the offshore wind farm.
- the wind farm data and/or the meteorological data comprise at least one piece of data obtained through a measurement performed by a sensor.

The invention also relates to a computer program product comprising a readable information carrier having stored thereon a computer program comprising program instructions, the computer program being loadable onto a data processing unit and causing at least the obtaining and determining steps of a method as previously described to be carried out when the computer program is carried out on the data processing unit.

The invention also relates to a readable information carrier on which is stored a computer program product as previously described.

### BRIEF DESCRIPTION OF THE DRAWINGS

The invention will be easier to understand in view of the following description, provided solely as an example and with reference to the appended drawings in which:
- Figure 1 is a schematic view of an example of an offshore wind farm with one floating wind turbine in failure, a vessel being on its way for repairing the broken turbine,
- Figure 2 is a schematic view of an example of a computer for implementing a method for determining the production availability of an offshore wind farm, and
- Figure 3 is a flowchart of an example of implementation of a method for determining the production availability of an offshore wind farm.

### DETAILED DESCRIPTION OF SOME EMBODIMENTS

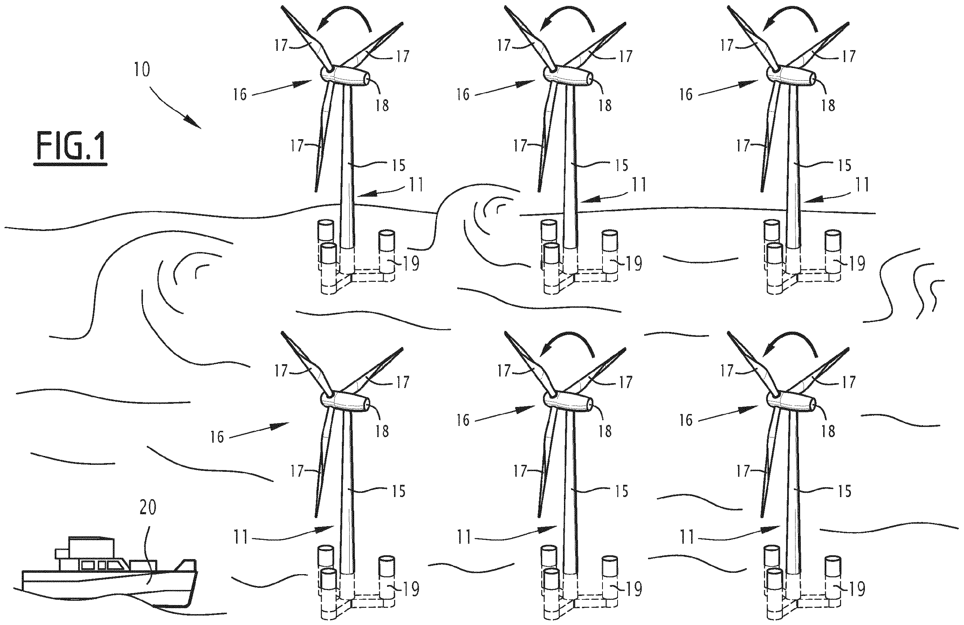

An example of an offshore wind farm 10 is illustrated on figure 1. A wind farm or wind park, also called a wind power station or wind power plant, is a group of wind turbines in the same location used to produce electricity. Wind farms vary in size from a small number of turbines to several hundred wind turbines covering an extensive area.

The offshore wind farm 10 comprises at least one floating wind turbine 11. A floating wind turbine is an offshore wind turbine mounted on a floating structure that allows the turbine to generate electricity in water depths particularly where fixed-foundation turbines are not feasible.

In the example of figure 1, the offshore wind farm 10 comprises six floating wind turbines 11. However, the invention applies to wind farms having less (at least one) or more floating wind turbines 11.

Typically, as illustrated for two floating wind turbines 11 of figure 1, each floating wind turbine 11 comprises a mast 15, a rotor 16 made of blades 17 (generally three), a nacelle 18 and a floater 19.

In particular, on the example of figure 1, one of the floating wind turbine 11 (bottom left) has a turbine failure so that the turbine 11 does not work. This has an impact on the production availability of the wind farm 10. Consequently, a vessel 20 with a maintenance team is sent to repair the broken turbine 11.

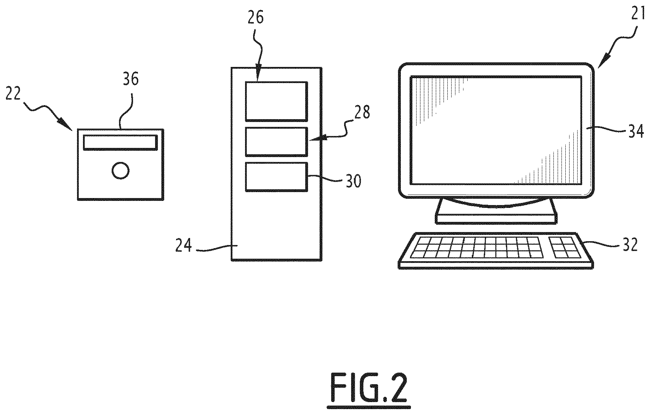

A calculator 21 is illustrated on figure 2.

The calculator 21 is preferably a computer.

More generally, the calculator 21 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 21 interacts with the computer program product 22.

As illustrated on figure 2, the calculator 21 comprises a processor 24 comprising a data processing unit 26, memories 28 and a reader 30 for information media. In the example illustrated on figure 2, the calculator 21 comprises a human machine interface 32, such as a keyboard, and a display 34.

The computer program product 22 comprises an information medium 36.

The information medium 36 is a medium readable by the calculator 21, usually by the data processing unit 26. The readable information medium 36 is a medium suitable for storing electronic instructions and capable of being coupled to a computer system bus.

By way of example, the information medium 36 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for determining the production availability of an offshore wind farm, when the computer program 22 is loaded on the processing unit 26 of the calculator 21.

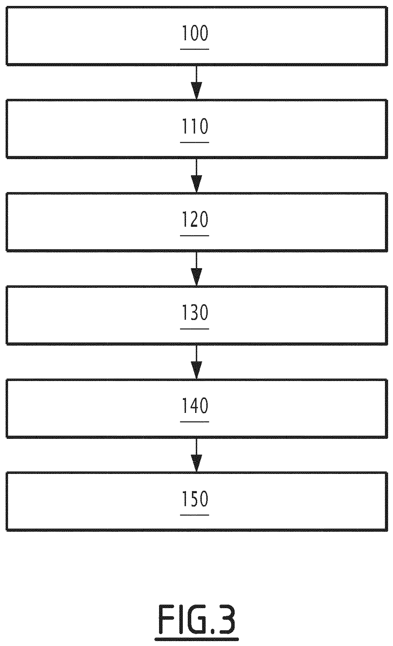

Operation of the calculator 21 will now be described with reference to figure 3, which diagrammatically illustrates an example of implementation of a method for determining the production availability of an offshore wind farm 10.

The determination method comprises a step 100 for obtaining wind farm data relative to features of the offshore wind farm 10. The obtaining step 100 is, for example, implemented by the calculator 21 interacting with the computer program product 22, that is to say is computer-implemented.

Preferably, the wind farm data comprise at least one of the following elements:
- data relative to the floating wind turbines 11 (dimensions, numbers),
- data relative to wind farm design (relative location of the floating wind turbines 11),
- data relative to failure rates of the floating wind turbines 11,
- data relative to scheduled maintenance and inspection (frequency, duration, repair team, logistics...),
- data relative to safety test (frequency, duration, repair team, logistics...),
- data relative to spare part management (initial stock, procurement time, ...), and
- data relative to curative maintenance (repair team, conditions, logistics...).

In an example, the wind farm data comprise at least one piece of data obtained through a measurement performed by a sensor on a floating wind turbine 11. The piece of data is for example the failure rates of the floating wind turbines 11.

The determination method comprises a step 110 for obtaining strategy data relative to operation and maintenance resources to carry out an action on the floating wind turbines 11 of the offshore wind farm 10. The obtaining step 110 is, for example, implemented by the calculator 21 interacting with the computer program product 22, that is to say is computer-implemented.

The action is for example an inspection of the floating wind turbine 11 or a maintenance performed on the floating wind turbine 11 or a repair of the floating wind turbine 11.

Preferably, the strategy data comprise data relative to staffing and logistic means and data relative to offshore base and spare part.

For example, the strategy data comprises the location of the operation center, the number of vessels, the speed of the vessels, the size of the vessels, the number of technicians, or the technician's working hours or the storage and supply of spare parts.

The determination method comprises a step 120 for obtaining meteorological data relative to an offshore environment for the offshore wind farm 10 over a given period of time. The obtaining step 120 is, for example, implemented by the calculator 21 interacting with the computer program product 22, that is to say is computer-implemented.

In an example, the meteorological data are data obtained through measurements performed by at least one sensor (ex: anemometer, thermometer, hygrometer, waves sensor...).

Preferably, the meteorological data comprise wind data and sea data, the sea data being relative to waves data and/or sea current.

The meteorological data are typically past data.

The given period of time is for example several months, or 1 or several years. The meteorological data are typically obtained for time step of the given period of time. The time step is for example 10 minutes or one or several hours.

The determination method comprises a step 130 for determining motion parameters as a function of the wind farm data and of the meteorological data. The determination step 130 is, for example, implemented by the calculator 21 interacting with the computer program product 22, that is to say is computer-implemented.

The motion parameters are parameters quantifying the motions of at least an element, such as the nacelle 18 or the floater 19, of a floating wind turbine 11 of the offshore wind farm 10 and/or the motions of a vessel 20 aiming to reach said floating wind turbine 11 to perform operation and/or maintenance actions on said floating wind turbine 11.

For example, the motion parameters comprise at least one of the following parameters:
- a parameter relative to the displacement of the nacelle 18 of a floating wind turbine 11 (with respect to a nominal position),
- a parameter relative to the acceleration of the nacelle 18 of a floating wind turbine 11,
- a parameter relative to the displacement of the floater 19 (on one or on several points of the floater 19) of a floating wind turbine 11 (with respect to a nominal position),
- a parameter relative to the acceleration of the floater 19 (on one or on several points of the floater 19) of a floating wind turbine 11,
- a parameter relative to the relative displacement of the floater 19 (on one or on several points of the floater 19) of a floating wind turbine 11 with respect to a given vessel 20 aiming to reach said floating wind turbine 11,
- a parameter relative to the relative acceleration of the floater 19 (on one or on several points of the floater 19) of a floating wind turbine 11 with respect to a given vessel 20 aiming to reach said floating wind turbine 11, and
- a parameter relative to a slowdown of the cruising speed of a given vessel 20 aiming to reach a floating wind turbine 11.

In an example, the determination step 130 is carried out on the basis of an hydrodynamic model as a function of the wind farm data and of the meteorological data.

The hydrodynamic model is for example a software in the frequency domain (potential calculation) if the response to the swell is preponderant. In another example, the hydrodynamic model is a software in the time domain (coupled aero-hydro-servo-elastic calculation) if the coupled effects of wind and waves are important.

Preferably, the calculator 21 has access to a database in which predetermined meteorological conditions are associated to predetermined motion parameters for the offshore wind farm 10. The association was obtained using the hydrodynamic model. The determination step 130 comprises comparing the meteorological data with the predetermined meteorological conditions of the database in order to obtain the predetermined meteorological conditions the closest from the meteorological data, and determining, as motion parameters, the predetermined motion parameters corresponding to the closest predetermined meteorological conditions.

In this example, a large number of hydrodynamic simulations were pre-calculated by the hydrodynamic model for all the meteorological conditions of a site (waves, current and wind), with a given design of floating wind turbine 11 (for example a model of the turbine 11, the floater 19 and its mooring system); and a given transfer vessel. These calculations allow to build a response matrix of the system according to all the weather conditions that can be encountered on site.

In another example, the determination step 130 comprises determining the motion parameters directly by the hydrodynamic model on the basis of the wind farm data and the meteorological data. In this case, a calculation is made for each considered time step.

The determination method comprises a step 140 for determining the production availability of the offshore wind farm 10 in the offshore environment over the given period of time on the basis of the wind farm data, of the strategy data and of the meteorological data, and of the determined motion parameters. The determining step 140 is, for example, implemented by the calculator 21 interacting with the computer program product 22, that is to say is computer-implemented.

In an example of implementation, the determination step 140 comprises, for each time step of the given period of time, determining any eventual non-productive events on the basis of the wind farm data, of the strategy data and of the meteorological data, a non-productive event being any event affecting the production of the offshore wind farm 10 and for which an operation and/or maintenance action is requested.

For example, at least a non-productive event is one of the following events:
- inspection and preventive maintenances, which are for example carried out in a scheduled manner and defined in relation to the design of the facilities, but whose start-up conditions may depend on the operational environment,
- failure and production shutdowns, which are for example occurring in a random or conditioned manner depending on the failure rates of the different equipment of the wind farm 10 and its operating ranges, and
- curative maintenance, which are for example carried out in reaction to failures and production stoppages and implementing the means of the operation and maintenance strategy such as operational personnel, logistical means or spare parts that may also depend on the operational environment.

In this example, the determination step 140 also comprises, at least in the case where a non-productive event has been determined for a considered time step, determining, on the basis of the motion parameters, the accessibility of the offshore wind farm 10 for an operation and/or a maintenance action (at the next time step). The action aims at ending the non-productive event. The wind farm 10 is considered accessible when an operation and/or a maintenance action can be carried out on the wind farm 10 (it is possible for an operation and maintenance team to reach a considered turbine and performed actions on this turbine). The wind farm 10 is considered inaccessible otherwise. It should be noted that the term "accessibility" is different from the term "production availability" used in the description. The production availability refers to the production of the wind farm over a given time period even if at some time the wind farm is considered inaccessible. Hence, the determined accessibility of the offshore wind farm for the considered time step(s) affects the production availability (decrease or not of the production availability depending on the accessibility of the wind farm 10).

The accessibility of the offshore wind farm 10 is, for example, determined by evaluating whether the motions parameters for the considered time step reach predetermined accessibility criteria (operational envelope for example). If so the wind farm 10 is considered accessible for an operation and/or a maintenance action at the next time step. Otherwise the wind farm 10 is considered inaccessible for said operation and/or maintenance action at the next time step. Hence, at each occurrence of a random event that requires technician access (for example to the floater 19 or the nacelle 18), the acceptability of the intervention with respect to motion and acceleration is verified by comparing the results of the hydrodynamic simulations with the accessibility criteria.

Hence, the determined availability of the wind farm (after non-productive events) enables modeling all the production stops (planned and random) of the wind farm 10 with their durations and the means necessary to remedy them and restart production. This enables obtaining the theoretical losses of the farm over the operating period. The meteorological conditions, and in particular the wind conditions allows to determine the level of production lost during the production stops as well as the level of production obtained at each time step during normal operation phase. The production availability of the wind farm 10 is thus deduced, which is the ratio of the actual production to the expected production.

Preferably, the motion parameters are determined only for each time step of the given period of time for which a non-productive event has been determined at the preceding time step (and not for the other time steps), which enables reducing calculation times. In a variant, the motion parameters are determined for each time step of the given period of time.

In an example, the determination step 140 is carried out using an operation and maintenance model. Typically, the operation and maintenance model implements a Monte-Carlo simulation.

In particular, the operation and maintenance model allows the temporal determination of the performances of the offshore wind farm 10, by modeling the architecture of the system (power curve, redundancy...) and by simulating its performances via the Monte Carlo simulation method, which takes into account the occurrences of statistical and probabilistic events affecting production.

Optionally, the determination method comprises a step 150 of setting up operation and maintenance resources for carrying out operation and maintenance actions on the offshore wind farm 10 as a function of the determined production availability of the offshore wind farm 10.

The setting up step 150 comprises for example selecting a maintenance team, a type and/or number of operation and maintenance vessels, or other elements relative to the strategy data as a function of the determined production availability. For example, the method is repeated for different strategy data, and the strategy data leading to an optimized production availability are used to set up the operation and maintenance resources.

Hence, the above method enables taking into account, in the O&M model, weather conditions and their impact on O&M activities at each time step of a given period of time, allowing :
- a better estimation of the farm's production availability,
- a better evaluation of the risk exposure of the technicians, and
- a more accurate choice of vessels and means of personnel transfers, and more globally the sizing of the whole O&M stategy.

This enables to evaluate in a more precise way the production availability of an offshore wind farm 10.

The person skilled in the art will understand that the embodiments and variants described above can be combined to form new embodiments provided that they are technically compatible. In addition, the order of the steps of the method is given as an example, and the order of some steps is interchangeable (for example steps 100, 110 and 120).

## Claims

1. A method for determining the production availability of an offshore wind farm (10), the offshore wind farm (10) comprising at least one floating wind turbine (11), the method comprising the following steps which are computer-implemented:
- obtaining wind farm data relative to features of the offshore wind farm (10),
- obtaining strategy data relative to operation and maintenance resources to carry out an action on the floating wind turbine(s) (11) of the offshore wind farm (10),
- obtaining meteorological data relative to an offshore environment for the offshore wind farm (10) over a given period of time,
- determining motion parameters as a function of the wind farm data and of the meteorological data, the motion parameters being parameters quantifying the motions of at least an element, such as the nacelle (18) or the floater (19), of a floating wind turbine (11) of the offshore wind farm (10) and/or the motions of a vessel (20) aiming to reach said floating wind turbine (11) to perform operation and/or maintenance actions on said floating wind turbine (11), and
- determining the production availability of the offshore wind farm (10) in the offshore environment over the given period of time on the basis of the wind farm data, of the strategy data, of the meteorological data, and of the determined motion parameters.

2. A method according to claim 1, wherein the step for determining the production availability comprises, for each time step of the given period of time :
- determining any eventual non-productive events on the basis of the wind farm data, of the strategy data and of the meteorological data, a non-productive event being any event affecting the production of the offshore wind farm (10) and for which an operation and/or maintenance action is requested, and
- at least in the case where a non-productive event has been determined, determining, on the basis of the motion parameters, the accessibility of the offshore wind farm (10) for an operation and/or a maintenance action, the determined accessibility of the offshore wind farm (10) for the considered time step affecting the production availability.

3. A method according to claim 2, wherein the accessibility of the offshore wind farm (10) is determined by evaluating whether the motions parameters for the considered time step reach predetermined accessibility criteria.

4. A method according to claim 2 or 3, wherein the motion parameters are determined only for each time step of the given period of time for which a non-productive event has been determined at the preceding time step.

5. A method according to any one of claims 1 to 4, wherein the computer has access to a database in which predetermined meteorological conditions are associated to predetermined motion parameters for the offshore wind farm (10), the motion parameters being determined by comparing the meteorological data with the predetermined meteorological conditions of the database in order to obtain the predetermined meteorological conditions the closest from the meteorological data, the determined motion parameters being the predetermined motion parameters corresponding to the closest predetermined meteorological conditions.

6. A method according to any one of claims 1 to 5, wherein each floating wind turbine (11) comprises a nacelle (18) and a floater (19), the motion parameters comprising at least one of the following parameters:
- a parameter relative to the displacement of the nacelle (18) of a floating wind turbine (11),
- a parameter relative to the acceleration of the nacelle (18) of a floating wind turbine (11),
- a parameter relative to the displacement of the floater (19) of a floating wind turbine (11),
- a parameter relative to the acceleration of the floater (19) of a floating wind turbine (11),
- a parameter relative to the relative displacement of the floater (19) of a floating wind turbine (11) with respect to a given vessel (20) aiming to reach said floating wind turbine (11),
- a parameter relative to the relative acceleration of the floater (19) of a floating wind turbine (11) with respect to a given vessel (20) aiming to reach said floating wind turbine (11), and
- a parameter relative to a slowdown of the cruising speed of a given vessel (20) aiming to reach a floating wind turbine (11).

7. A method according to any one of claims 1 to 6, wherein the meteorological data comprise wind data and sea data, the sea data being relative to waves data and/or sea current.

8. A method according to any one of claims 1 to 7, wherein the strategy data comprise data relative to staffing and logistic means and data relative to offshore base and spare part.

9. A method according to any one of claims 1 to 8, wherein the wind farm data comprise at least one of the following elements:
- data relative to the floating wind turbines (11),
- data relative to wind farm design,
- data relative to failure rates of the floating wind turbines (11),
- data relative to scheduled maintenance and inspection,
- data relative to safety test,
- data relative to spare part management, and
- data relative to curative maintenance.

10. A method according to any one of claims 1 to 9, wherein at least a non-productive event, is one of the following events:
- inspection and preventive maintenance,
- breakdown and production shutdown, and
- curative maintenance.

11. A method according to any one of claims 1 to 10, wherein the step for determining the motion parameters is performed using an hydrodynamic model and the step for determining the production availability is performed using an operation and maintenance model.

12. A method according to any one of claims 1 to 11, wherein the determined production availability of the offshore wind farm (10) is intended to be used for setting up operation and maintenance resources for carrying out operation and maintenance actions on the offshore wind farm (10).

13. A method according to any one of claims 1 to 12, wherein the method comprises a step for setting up operation and maintenance resources for carrying out operation and maintenance actions on the offshore wind farm (10) as a function of the determined production availability of the offshore wind farm (10).

14. A method according to any one of claims 1 to 13, wherein the wind farm data and/or the meteorological data comprise at least one piece of data obtained through a measurement performed by a sensor.

15. A computer program product comprising a readable information carrier having stored thereon a computer program comprising program instructions, the computer program being loadable onto a data processing unit and causing at least the obtaining and determining steps of a method according to any one of claims 1 to 14 to be carried out when the computer program is carried out on the data processing unit.
